# EUROPEAN PATENT APPLICATION

(11) **EP 1 191 793 A2**
(43) Date of publication of application: **27.03.2002**
(21) Application number: 01308099.9
(22) Date of filing: 24.09.2001
(51) Int. Cl.: H04N 7/173, H04N 7/24

(54) **Animation distributing method, animation distributing server and corresponding system**

(30) Priority: 25.09.2000 JP 2000290540
(71) Applicant: Monolith Co., Ltd., Tokyo 106-0045 (JP)
(72) Inventor: Akiyoshi, Kozo, c/o Monolith Co. Ltd, Tokyo 106-0045 (JP); Akiyoshi, Nobuo, c/o Monlith Co. Ltd, Tokyo 106-0045 (JP)
(74) Representative: Turner, James Arthur

(57) **Abstract**

When an animation distributing server receives from a user a request to distribute animation, the server selects key frames to be transmitted and transmits the selected key frames to the user. Thereafter, interpolation data are generated, a digital watermarking processing is performed thereon, and the interpolation data are transmitted to the user. Moreover, a viewer is sent to the user. The key frames and the interpolation data are transmitted separately in a manner such that they can be integrated into one at the user side.

## Description

The present invention relates to an animation distributing technology.

Thanks to wide spread of the Internet, environments in which diverse information that never existed in the past is provided through various services available are becoming complete. For instance, the on-demand broadcasting, though the idea itself had existed for long time, has finally gotten under way thanks to the advancement of technology and the preparation of network infrastructure.

Motion pictures (hereinafter also referred to as animation) are normally composed by switching a frame picture for the predetermined number of pieces in a second. In the case where animation is broadcast on television or the like, many frame pictures can be transmitted in a second at a level of the number of currently available channels. On the other hand, a less amount of data is always preferred though the speed of communication via the Internet has become fairly high.

Even in a case where data are once downloaded into a PC and the animation is then reproduced on the PC, economical and practical service is hard to come by if the data amount is excessively large. Moreover, in the distribution via the Internet there possibly exists a risk where the animation might be stolen and used by third parties other than proper users who paid the cost of the animations.

Various respective aspects and features of the invention are defined in the appended claims. Features from the dependent claims may be combined with features of the independent claims as appropriate and not merely as explicitly set out in the claims.

An embodiment according to the present invention has been made in view of the foregoing circumstances and can provide a distribution technology of animation using only small amount of data. Another embodiment of the present invention can provide an animation distributing technology with reliable security.

Another preferred embodiment of the present invention relates to an animation distributing server. This server includes: a key frame acquiring unit which acquires key frames among a plurality of frames that constitute animation; an interpolation data generator which generates interpolation data used for composing the animation by interpolating between the key frames; and an interpolation data distributing unit which distributes the interpolation data to a user in a state such that the interpolation data are separated from the key frames.

The key frames alone or the interpolation data alone can not reproduce the animation. Transmitting the key frames and the interpolation data separately can prevent the animation from being stolen and used by a third party. Moreover, the animation is composed by the key frames and a small amount of interpolation data, so that the total amount of data for the animation can be reduced.

The interpolation data generator may generate the interpolation data by performing a matching processing between the key frames.

This server may include a key frame distributing unit which distributes the key frames to the user in a state such that the key frames are capable of being integrated with the separately transmitted interpolation data at a user side. The key frames and the interpolation data may be capable of being integrated by implementing, for example, a method in which names of the separately sent files include a same identification number therein.

This server may further include a key frame selector which selects key frames to be sent to the user, from the key frames, and the interpolation data generator may generate the interpolation data which interpolate between the key frames to be sent to the user. The key frame selector may select the key frames in such a manner that combination of key frames to be selected differs for each user. Recording the combination of the key frames distributed to the users makes possible to specify a user who duplicated animation in the event that the illegally duplicated animation appears in public.

The key frame selector may select the key frames based on a condition as to image quality of the animation. For example, for users who desire animation of high image quality, many key frames may be selected by narrowing the interval between the key frames whereas, for users to whom low image-quality animation suffices, the reduced number of key frames may be selected by increasing the interval between the key frames. Moreover, a charge condition may be changed according to the image quality selected.

This server may further include a viewer distributing unit which distributes a viewer that composes the animation by the key frames and the interpolation data so as to be displayed thereon. Moreover, this server may further include a digital watermarking processing unit which inserts digital watermarking data into the interpolation data or viewer. Thus, when illegal duplicates are circulated widely, their source can be tracked down, and the illegal duplicates can be prevented in advance.

Another preferred embodiment of the present invention relates to an animation distributing system. This animation distributing system includes: a key frame distributing server serving as a first server which distributes, to a user, key frames among frames that constitute animation; and an interpolation data distributing server serving as a second server which generates interpolation data to construct the animation by interpolating between the key frames and which then distributes the interpolation data to the user. The second server may be provided at a different site from that of the first server. For example, the first server may be provided at a film distributing personnel or copyright management personnel side while the second server may be provided at a company side entrusted with the film distribution via a network.

The key frame distributing server may include: a distributing request receiving unit which receives from the user a distribution request of the animation; a key frame sending unit which, upon receipt of the distribution request, transmits the key frames to the user; and an interpolation data requesting unit which requests the interpolation data distributing server to distribute the interpolation data, and the interpolation data distributing server may include: an interpolation data generator which, upon receipt of the distribution request of the interpolation data from the interpolation data requesting unit, generates the interpolation data; and an interpolation data distributing unit which distributes the interpolation data to the user in a manner such that the key frames are associated with the interpolation data.

The key frame sending unit may transmit the key frames to the interpolation data distributing server, and the interpolation data generator may generate interpolation data for the key frames transmitted from the key frame sending unit.

Still another preferred embodiment of the present invention relates to an animation distributing method. This method includes: acquiring key frames among a plurality of frames that constitute animation; acquiring interpolation data used for composing the animation by interpolating the key frames; and distributing to a same user the key frames and the interpolation data via different routes, respectively. In this distributing step, the key frames and the interpolation data may be distributed to a same user not at different routes but at different timings, respectively. The "acquiring interpolation data" does not necessarily imply and is not limited to that the interpolation data are generated by itself.

Moreover, any arbitrary combination of the above-described structural components as well as expressions, in the present invention, applied as or interchanged between an apparatus, a method, a system and so forth are still effective as and encompassed by embodiments of the present invention.

Moreover, this summary of the invention does not necessarily describe all necessarily features so that the invention may also be sub-combination of these described features.

The invention will be now described by way of example with reference to the accompanying drawings, throughout which like parts are referred to by like references, and in which:

Fig. 1 shows a structure of an animation distributing system according to a first embodiment of the present invention.

Fig. 2 shows a schematic procedure for a processing of animation distribution in the animation distribution system according to the first embodiment.

Fig. 3 shows an internal structure of the animation distributing server.

Fig. 4 shows internal data of a user database.

Fig. 5 shows an animation distribution screen.

Fig. 6 shows a structure of an animation distributing system according to a second embodiment of the present invention.

Fig. 7 shows a schematic procedure for a processing of animation distribution in the animation distribution system according to the second embodiment.

Fig. 8 shows an internal structure of a key frame distributing server.

Fig. 9 shows an internal structure of an interpolation data distributing server.

Fig. 10 shows a schematic procedure for a processing of animation distribution in an animation distribution system according to a third embodiment of the present invention.

The invention will now be described based on the preferred embodiments, which do not intend to limit the scope of the present invention, but exemplify the invention. All of the features and the combinations thereof described in the embodiment are not necessarily essential to the invention.

### Embodiment 1

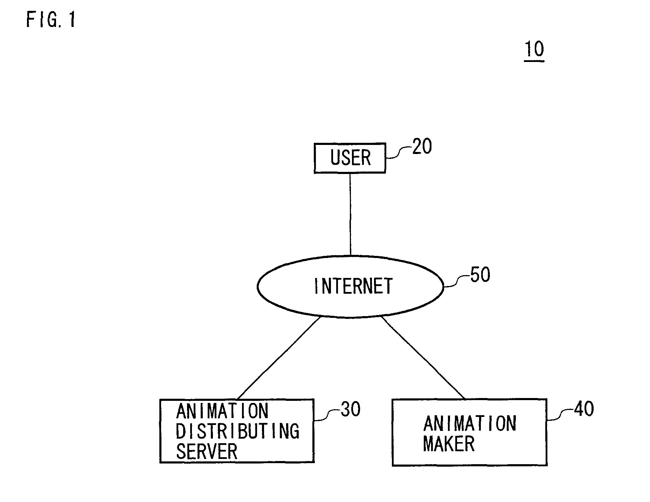

Fig. 1 shows a structure of an animation distributing system 10 according to a first embodiment. In the animation distributing system 10, a user terminal 20, a terminal 40 of an animation maker that produces key frames for animation, and an animation distributing server 30 which distributes the animation by generating interpolation data from the key frames are all connected to a network (for example, the Internet 50 in Fig. 1). Hereinafter, when a "user" is simply mentioned, a user himself/herself and a user terminal are not particularly distinguished. Similarly, when a "maker" is mentioned, a maker itself and a maker's terminal are not particularly distinguished.

The animation distributing system 10 according to this embodiment separates the animation into the key frames and the interpolation data, and distributes them respectively in separated states. The key frames are frames that serve as principal, basic or key ones among a plurality of frames constituting the animation. For example, frames corresponding to the moment when an action changes or when a background or angle switches, may be chosen as the key frames. The interpolation data are information used for composing the animation by interpolating between the key frames.

As a method by which to generate the interpolation data from the key frames, one can use a technique described in Japanese Patent No. 2927350.

A technique in which animation is reproduced from the key frames and interpolation data is also disclosed in the Japanese Patent No. 2927350. Summarizing this technique described in the Japanese Patent No. 2927350, the positional correspondence relation between pixels of two key frames, namely, matching data between the two key frames are the interpolation data. Firstly, critical points are extracted from the respective key frames, and then the correspondence between the pixels are obtained by evaluating the correspondence of those in terms of both the positional closeness and the closeness of the pixel values. Once the correspondence relation is known, an intermediate frame between the key frames can be generated by interpolating, that is, by interior-dividing the positions and pixel values of pixels that correspond between the two key frames.

It is verified that when this technique is implemented, motion pictures with high image quality can be distributed with a small amount of data, compared to the conventional motion picture distributing methods. Thus, even under the current communication speed in the Internet, the motion pictures can be distributed with a sufficient image quality, not requiring long communication time. It is to be noted that the method in which to generate the interpolation data from the key frames are not limited to this and, any other known matching techniques may be implemented to obtain the interpolation data.

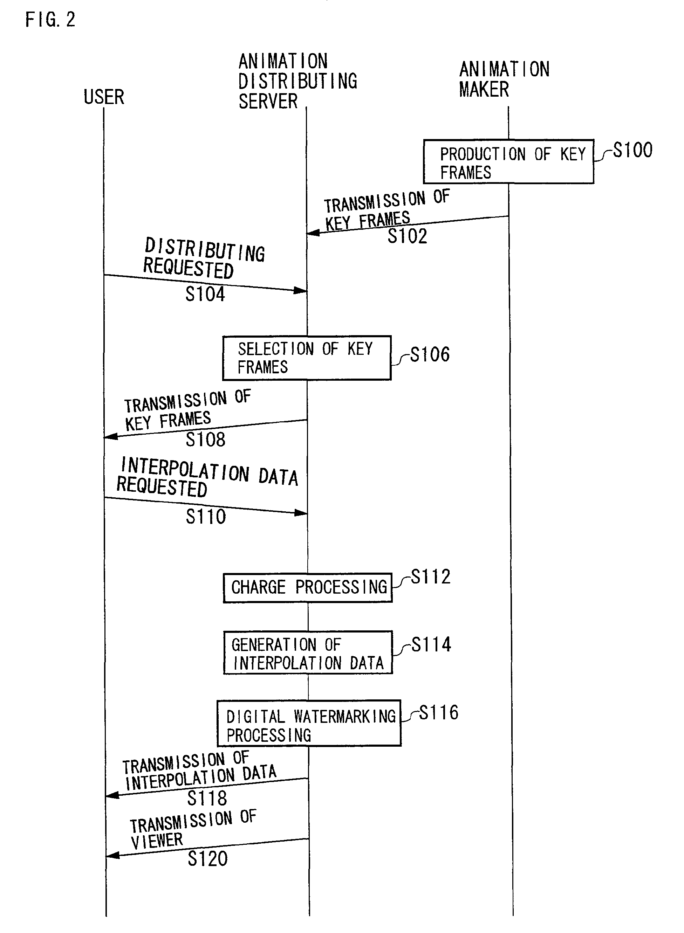

Fig. 2 describes a processing flow in the animation distributing system 10 when animation is distributed from the animation distributing server 30 to the user 20, in terms of communication between the user 20, animation distributing server 30 and the animation maker 40. Overview thereof will be described here while the details thereof will be described later.

As shown in Fig. 2, firstly the animation maker 40 produces key frames (S100) which will be transmitted to the animation distributing server 30 (S102). When the animation distributing server 30 receives a request for animation distribution from the user (S104), the animation distributing server 30 selects the key frames to be distributed, based on a user's instruction (S106) and transmits the thus selected key frames to the user (S108). Next, when a request for interpolation data is made from the user (S110), the animation distributing server 30 carries out a charge processing (S112), generates the interpolation data (S114), carries out a process of inserting digital watermarks (S116), and transmits the interpolation data to the user (S118). Moreover, the animation distributing server 30 sends the user a viewer by which to reproduce animation from the key frames and the interpolation data (S120). The animation distributing server 30 sends to the user, audio data accompanied by the animation, if necessary.

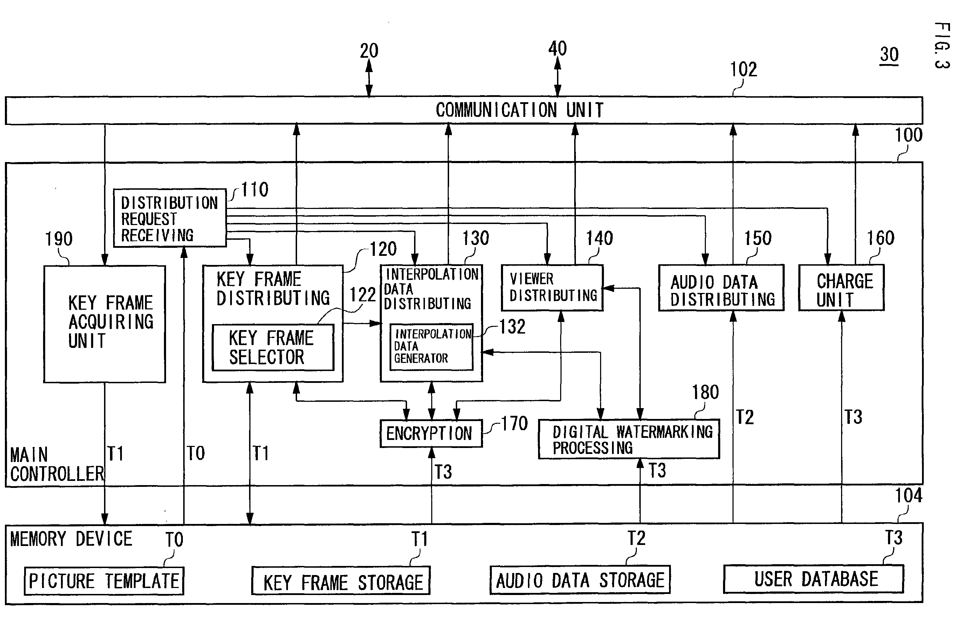

Fig. 3 shows an internal structure of the animation distributing server 30. Though this structure can be realized by, in terms of hardware components, an arbitrary CPU, a memory, a memory-loaded program having animation distributing capacity, and so forth, Fig. 3 illustrates functional blocks which are realized by affiliation thereof. Thus, it is understood by the skilled in the art that these functional blocks can be realized by hardware only, software only or various forms including combination thereof.

The animation distributing server 30 mainly includes a main controller 100, a communication unit 102 and a memory device 104, and functions also as a Web server. The communication unit 102 exchanges data between the main controller 100, the user terminal 20 and the animation maker's terminal 40. The communication unit 102 is provided with hardware such as a modem necessary for the communication, a driver for controlling the communication and other programs.

In the memory device 104, various data and tables are stored. A picture template T0 stores pictures that the animation distributing server 30, as a Web server, presents to the user terminal 20, as text data described by markup languages such as HTML and XML.

A key frame storage T1 stores key frames sent from the animation maker 40. For example, key frames may be selected, by the animation maker 40, from animation frames already made for distribution purposes for movies and TV's, at predetermined intervals, so as to be transmitted to the animation distributing server 30. Moreover, the key frames may be selected so that the motion of a character can be seen further naturally when the key frames are interpolated. Moreover, when all frames that constitute the animation may be transmitted to the animation distributing server 30 so that the animation distributing server 30 may select key frames from the whole key frames. Or, key frames only may be made on the assumption that the animation is distributed in the method according to the present embodiment.

An audio data storage T2 stores audio data accompanied with animation. The audio data may be utilized from the audio data for animation that the animation maker 40 has already made for distribution purposes for movies and TV's.

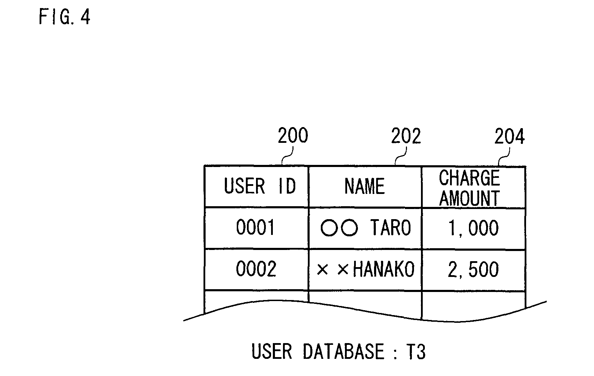

A user database T3 stores information on users. Fig. 4 shows an example of a structure of the user database T3, and there are provided a user ID column 200, a name column 202 and a charge amount column 204. As an example, registered are the name "○○ TARO" and the charge amount "1000 Yen" as the information on the user ID "0001".

Further detailed information too may be stored in the database. For example, information on the animation that was distributed to the user may be stored in the user database T3. Then, as will be described later, the combination of key frames distributed to the user may be recorded. That the combinations of the key frames are recorded when different key frames are distributed to different users leads to finding a user who duplicated animation in the event that the animation is illegally duplicated.

A key frame acquiring unit 190 acquires key frames sent from the animation maker 40, and stores the key frames in the key frame storage T1.

A distribution request receiving unit 110 reads out a screen necessary for receiving a distribution request of animation sent from a user, from the picture template T0, so as to be displayed in the user terminal 20. Upon receipt of the distribution request from the user, the distribution request receiving unit 110 analyzes contents of its request, and sends an instruction to a key frame distributing unit 120, interpolation data distributing unit 130, viewer distributing unit 140, audio data distributing unit 150 and a charge unit 160, according as necessity arises.

When the user utilizes the animation distributing server 30 for the first time, a user registration screen (not shown) will be presented to the user at first, so as to let the user input his/her individual information. Then, the thus inputted user information is stored in the user database T3.

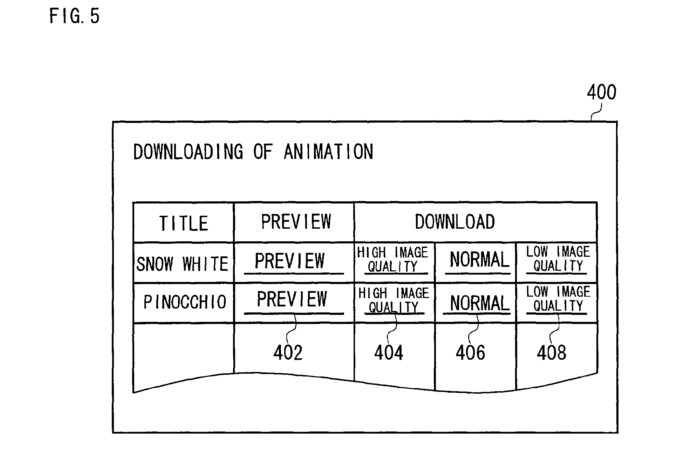

Fig. 5 shows an animation distribution screen 400 which is displayed on the user terminal 20 by the distribution request receiving unit 110. On the animation distribution screen 400, titles of animations stored in the animation distributing server 30 are displayed. The user selects animation that he/she desires to see among the displayed titles.

Then, the user sees preview of the animation by clicking on a preview button 402, so that the preview can help him/her select what he/she desires. When the user clicks on the preview button 402, the animation distributing server 30 reproduces the animation for a predetermined duration of time. Then, a predetermined number of key frames as well as interpolation data thereof may be transmitted, or motion picture data in other formats may be transmitted. Or, some numbers of key frames only may be transmitted.

When the user wishes to download the animation, he/she clicks on a download button 404, 406 or 408, so that a distribution request is sent to the animation distributing server 30. Then, image quality of the animation can be selected. When a high image quality button 404 is clicked by the user, the animation distributing server 30 distributes fine and high-image-quality animation by increasing the number of key frames. When a low image quality button 408 is clicked by the user, the animation distributing server 30 distributes animation having a small amount of data, by keeping the number of key frames low.

When the key frame distributing unit 120 receives a distribution request of the animation from the user, the unit 120 reads out key frames of the animation from the key frame storage T1. First, a key frame selector 122 selects key frames to be sent, from the key frames thus read out according to the user's request. Then, an encryption unit 170 encrypts the selected key frames according as necessity arises. Thus, that a third party other than the user receives and utilizes the key frames is prevented. Thereafter, the key frame distributing unit 120 sends the key frames to the user terminal 20 via the communication unit 102. Information necessary for decoding the encrypted key frames may, for example, be sent to the user in the form such that the information is embedded in the viewer.

When the user requires a high-image-quality animation, the key frame selector 122 may select all key frames it stores. When the user requires a low-image-quality animation, the key frame selector 122 may thin out the key frames at predetermined intervals. Thus, the key frame selector 122 may select key frames based on a condition relating to the image quality. Moreover, the key frame selector 122 may select only the key frames for scenes that the user desires. The key frames may be selected so that the combination thereof differs for each user. Thus, as mentioned above, that the key frames transmitted to the users are recoded in the user database T3 helps specify a user who made a duplicate in the event that illegal copies of the animation circulate widely.

An interpolation data distributing unit 130 generates interpolation data which interpolates between the key frames selected by the key frame selector 122, and distributes the interpolation data thus generated to the user. Firstly, an interpolation data generator 132 carries out a matching processing between key frames in both directions, so as to generate the interpolation data. Then, the technique disclosed in Japanese Patent No. 2927350 of the same assignee may be utilized. Thereafter, the encryption unit 170 encrypts the interpolation data according as necessity arises while the digital watermarking processing unit 180 inserts data, such as the user name read out of the user database T3, into the interpolation data as a digital watermark. Inserting the user data as a digital watermark prevents illegal duplicates from circulating around. Thereafter, the interpolation data distributing unit 130 transmits the interpolation data to the user terminal 20 via the communication unit 102.

A viewer distributing unit 140 distributes to the user a viewer by which to reproduce animation from the key frames and the interpolation data. The viewer may be one utilizing the technique disclosed in the Japanese Patent No. 2927350. According as necessity arises, the viewer too is encrypted by the encryption unit 170 and the digital water marking is inserted into the viewer by the digital watermarking processing unit 180.

The audio data distributing unit 150 transmits the audio data accompanied with the animation to the user by reading out the audio data from the audio data storage T2. As occasion demands, the encryption processing and digital watermarking processing may be performed on the audio data too.

A charge unit 160 carries out a process of charging the user for the commercial value of the animation. In this first embodiment, when a request to distribute animation is received from a user, the charge unit 160 adds the value of the animation to the charge amount column 204 of the user database T3. An account settlement processing may be performed on-line or off-line, every time the animation is distributed or at intervals of a predetermined period to settle the charge together for the period covered.

As shown in Fig. 2, when the animation distributing server 30 according to the present embodiment receives a distribution request for animation from a user, the server 30 transmits the key frames constituting the animation and the interpolation data that interpolates between the key frames, in separate states. In other words, the key frames and the interpolation data are transmitted to a same user at different timings, respectively. Thus, even if one of them is stolen and used by a third party, possible misuse and illegal use of the stolen animation can be prevented, for the animation can not be reproduced unless the other separated part exists.

The key frames, interpolation data and audio data are transmitted in a state such that they can be integrated at the user side. For example, names of the respective files may be "0001.key", "0001.map" and "0001.wav" in which the same identification numbers are used. Methods by which to recombine and integrate the separated parts are not limited to this and any methods capable of integrating the separated parts of the animation at the user's viewer will suffice.

Though the key frames, interpolation data and viewer are transmitted in this order in Fig. 2, the order in which to be sent is not limited to this. The timing of the charge processing may be any timing. Moreover, if a plural of animations having different titles can be reproduced by a certain commonly used viewer, the viewer needs not be sent to the user having such the viewer.

As described above, according to the animation distributing system according to this first embodiment, the animation is distributed with a smaller amount of data compared to the conventional motion picture distributing methods. Moreover, since a plurality of data necessary for reproducing the animation are separately transmitted in separated states, the reliable animation distributing method with guaranteed safety is provided.

### Embodiment 2

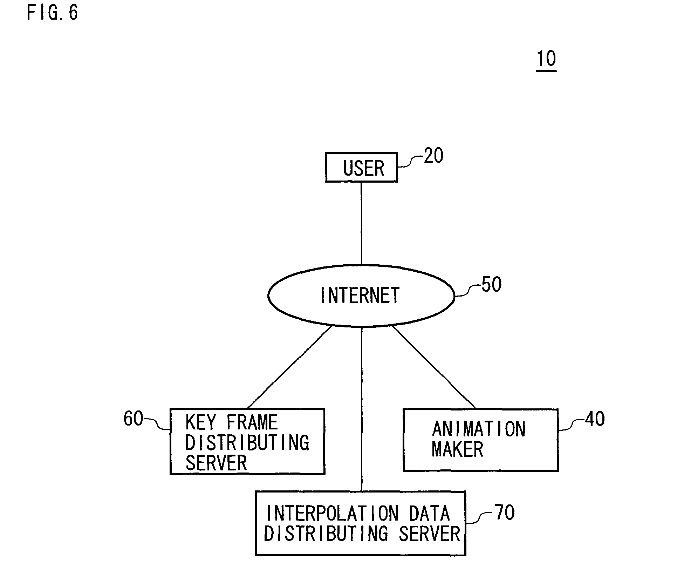

Fig. 6 shows a structure of an animation distributing system 10 according to a second embodiment. The animation distributing system 10 according to the second embodiment includes a key frame distributing server 60 and an interpolation data distributing server 70 in the place of the animation distributing server 30 in the animation distributing system 10 shown in Fig. 1. A user terminal 20, the key frame distributing server 60, the interpolation distributing server 70 and a terminal 40 of an animation distributor or animation maker are all connected to a network that is the Internet 50 in this example of Fig. 6.

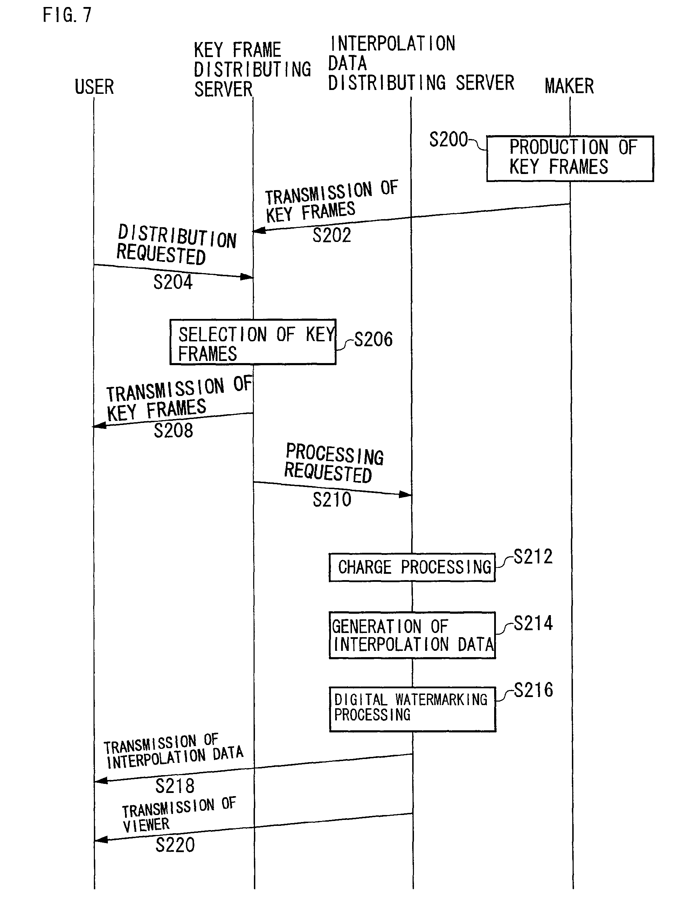

Fig. 7 describes a processing flow in the animation system 10 when animation is distributed from the animation distributing server 30 to the user 20, in terms of communication between the user 20, key frame distributing server 30, interpolation data distributing server 70 and the animation maker 40.

Referring to Fig. 7, firstly the animation maker 40 produces key frames (S100) which will be transmitted to the key frame distributing server 60 (S202). When the key frame distributing server 60 receives a request for animation distribution from the user (S204), the key frame distributing server 60 selects the key frames to be distributed, based on a user's instruction (S206) and transmits the thus selected key frames to the user (S208). Thereafter, the key frame distributing server 60 makes a request for the interpolation data distributing server 70 to carry out a distribution processing of interpolation data (S210). The interpolation data distributing server 70 carries out a charge processing (S212), generates the interpolation data (S214), carries out a process of inserting digital watermarks (S216), and transmits the interpolation data to the user (S218). Moreover, a viewer by which to reproduce animation from the key frames and the interpolation data is sent to the user (S220).

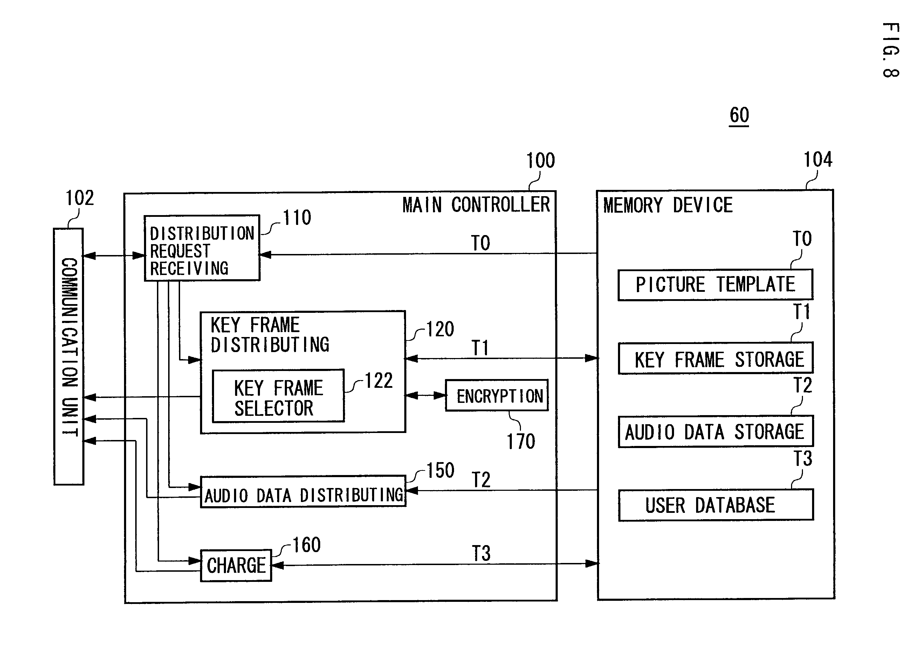

Fig. 8 shows an internal structure of the key frame distributing server 60. The key frame distributing server 60 includes, among the components of the animation distributing server 30 shown in Fig. 3, members necessary for distributing the key frames. The same members as those shown in Fig. 3 are given the same reference numerals.

In the second embodiment, when a distribution request receiving unit 110 receives a distribution request of animation from the user, the distribution request receiving unit 110 instructs the key frame distributing unit 120, audio data distributing unit 150 and charge unit 160 to carry out necessary processings. At the same time, the distribution request receiving unit 110 makes a request to the interpolation data distributing server 70 that the interpolation data be distribution-processed. Then, the key frames selected by a key frame selector 122 is transmitted to the interpolation data distributing server 70. Other operations are similar to those described in the first embodiment.

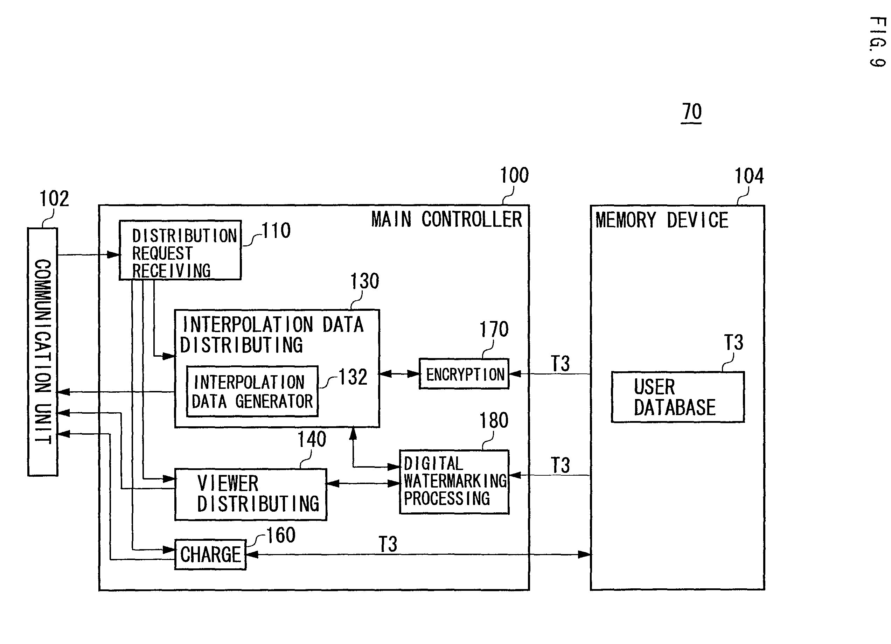

Fig. 9 shows an internal structure of the interpolation data distributing server 70. The interpolation data distributing server 70 includes, among the components of the animation distributing server 30 shown in Fig. 3, members necessary for distributing the interpolation data. The same members as those shown in Fig. 3 are given the same reference numerals.

In the second embodiment, an interpolation data generator 132 generates interpolation data based o the key frames supplied from the key frame distributing server 60. Other operations are similar to those described in the first embodiment.

As described above, the key frames and the interpolation data are sent from separate servers, respectively, namely, in a broader sense the key frames and the interpolation data are sent through different routes, respectively, so that the risk where both the key frames and interpolation data might be stolen and used by third parties is minimized. Similar to the case of the first embodiment, the key frames and the interpolation data are transmitted in such the forms that they can be recombined and integrated at the user side.

Though the key frames, interpolation data and viewer are transmitted in this order in Fig. 7, the order in which to be sent is not limited to this, similar to the first embodiment. The timing of the charge processing is not limited to that shown in Fig. 7, and the key frame distributing server 60 may carry out a processing which charges values of the key frames. The user database T3 needs not be provided in both the key frame distributing server 60 and the interpolation data distributing server 70. The user database T3 may be generally managed by only one of the two servers.

The animation maker 40 may send the key frames to not only the key frame distributing server 60 but also the interpolation data distributing server 70 too. Then, when the key frame distributing server 60 requests the interpolation data distributing server 70 to generate the interpolation data, the key frame distributing server 60 needs not to send the key frames themselves but needs only to inform the interpolation data distributing server 70 of which key frames were sent. Thus, the transmission load can be reduced.

The animation maker 40 itself may operate the key frame distributing server 60. Then, the step 202 in which the key frames are transmitted to the key frame distributing server 60 may be omitted.

### Embodiment 3

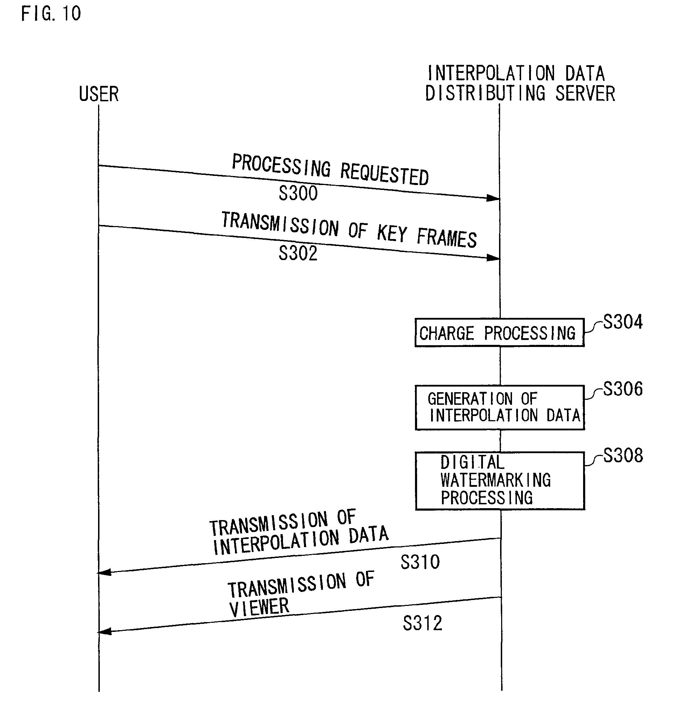

Fig. 10 describes a processing flow in the animation distributing system 10 according to a third embodiment when animation is distributed to the user 20, in terms of exchange between the user 20 and the interpolation data distributing server 70. The structure of the interpolation data distributing server 70 in the third embodiment is similar to that of the second embodiment shown in Fig. 9.

Referring to Fig. 10, firstly the user requests the interpolation data distributing server 70 to perform a distribution processing of interpolation data (S300), and then the user sends key frames desiring generation of interpolation data to the interpolation data distributing server 70 (S302). The interpolation data distributing server 70 carries out a charge processing (S304), generates the interpolation data (S306), then carries out a digital watermarking processing by inserting digital watermarks into the interpolation data (S308) and transmits the interpolation data to the user (S310). Moreover, the interpolation data distribution server 70 sends a viewer to the user (S312), if necessary.

The interpolation data distributing server 70 according to the third embodiment can be utilized, for example, when a user, who has obtained only the key frames from the animation maker 40 or the key frame distributing server 60, wishes to obtain interpolation data in order to reproduce animation. Moreover, the server 70 according to the present embodiment can be utilized when, after having produced or obtained key frames only, the maker wishing to distribute animation intends to obtain interpolation data thereof.

The present invention has been described based on several embodiments which are only exemplary. It is understood by those skilled in the art that there are further available other various modifications to each component and the combination of each processing described and that such modifications are also encompassed by the scope of the present invention.

According to the present embodiments, the animation distributing technology with a significantly reduced amount of data is provided. Moreover, by implementing the present invention, a most reliable animation distributing technique which guarantees safety and secrecy of the animation is provided.

Although the present invention has been described by way of exemplary embodiments, it should be understood that many changes and substitutions may be made by those skilled in the art without departing from the scope of the present invention which is defined by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An animation distributing (30) server, comprising:
a key frame acquiring unit (190) which acquires key frames among a plurality of frames that constitute animation;
an interpolation data generator (132) which generates interpolation data used for composing the animation by interpolating between the key frames; and
an interpolation data distributing unit (130) which distributes the interpolation data to a user in a state such that the interpolation data are separated from the key frames.

2. An animation distributing server (30) according to Claim 1, wherein said interpolation data generator (132) generates the interpolation data by performing a matching processing between the key frames.

3. An animation distributing server (30) according to Claim 1, further comprising a key frame distributing unit (120) which distributes the key frames to the user in a state such that the key frames are capable of being integrated with the separately transmitted interpolation data at a user side.

4. An animation distributing server (30) according to Claim 2, further comprising a key frame distributing unit (120) which distributes the key frames to the user in a state such that the key frames are capable of being integrated with the separately transmitted interpolation data at a user side.

5. An animation distributing server (30) according to Claim 3, further comprising a key frame selector (122) which selects key frames to be sent to the user, from the key frames,
wherein said interpolation data generator (132) generates the interpolation data which interpolate between the key frames to be sent to the user.

6. An animation distributing server (30) according to Claim 5, wherein said key frame selector (122) selects the key frames in such a manner that combination of key frames to be selected differs for each user.

7. An animation distributing server (30) according to Claim 5, wherein said key frame selector (122) selects the key frames based on a condition as to image quality of the animation.

8. An animation distributing server (30) according to Claim 1, further comprising a viewer distributing unit (140) which distributes a viewer that composes the animation by the key frames and the interpolation data so as to be displayed thereon.

9. An animation distributing server (30) according to Claim 2, further comprising a viewer distributing unit (140) which distributes a viewer that composes the animation by the key frames and the interpolation data so as to be displayed thereon.

10. An animation distributing server (30) according to Claim 3, further comprising a viewer distributing (140) unit which distributes a viewer that composes the animation by the key frames and the interpolation data so as to be displayed thereon.

11. An animation distributing server (30) according to Claim 5, further comprising a viewer distributing unit (140) which distributes a viewer that composes the animation by the key frames and the interpolation data so as to be displayed thereon.

12. An animation distributing server (30) according to Claim 8, further comprising a digital watermarking processing unit (180) which inserts digital watermarking data into the interpolation data or viewer.

13. An animation distributing server (30) according to Claim 12, further comprising a storage (104) including a user database which records information on individual users.

14. An animation distributing server (30) according to Claim 11, further comprising an encryption unit (170) which encrypts the selected key frames or audio data, wherein information necessary for decoding the encrypted key frames or audio data is transmitted to the user in a form such that the information is embedded in the viewer.

15. An animation distributing system (10), comprising:
a key frame distributing server (60) which distributes, to a user, key frames among frames that constitute animation; and
an interpolation data distributing server (70) which generates interpolation data to construct the animation by interpolating between the key frames and which then distributes the interpolation data to the user,
said key frame distributing server (60) including:
a distributing request receiving unit (110) which receives from the user a distribution request of the animation;
a key frame sending unit (122) which, upon receipt of the distribution request, transmits the key frames to the user; and
an interpolation data requesting unit which requests said interpolation data distributing server to distribute the interpolation data, and
said interpolation data distributing server (70) including:
an interpolation data generator (132) which, upon receipt of the distribution request of the interpolation data from said interpolation data requesting unit, generates the interpolation data; and
an interpolation data distributing unit (130) which distributes the interpolation data to the user in a manner such that the key frames are associated with the interpolation data.

16. An animation distributing system (10) according to Claim 15, wherein said key frame sending unit (120) transmits the key frames to said interpolation data distributing server (70), and said interpolation data generator (132) generates interpolation data for the key frames transmitted from said key frame sending unit (120).

17. An animation distributing system (10), including:
a first server (60) which distributes to a user, key frames among frames that constitute animation, and
a second server (70), provided at a site different from that of said first server, which distributes to the user, interpolation data used for constructing the animation by interpolation between the key frames.

18. An animation distributing method, comprising:
acquiring key frames among a plurality of frames that constitute animation;
acquiring interpolation data used for composing the animation by interpolating the key frames; and
distributing to a same user the key frames and the interpolation data via different routes, respectively.

19. An animation distributing method, comprising:
acquiring key frames among a plurality of frames that constitute animation;
acquiring interpolation data used for composing the animation by interpolating the key frames; and
distributing to a same user the key frames and the interpolation data at different timings, respectively.
